Europäisches Patentamt

**European Patent Office**

**Office européen des brevets**

(19)

(11) Numéro de publication : **0 130 127**
**B1**

(12) **FASCICULE DE BREVET EUROPÉEN**

(45) Date de publication du fascicule du brevet :
**02.03.88**

(51) Int. Cl.⁴ : **A 01 B    3/426**, A 01 B    3/40

(21) Numéro de dépôt : **84401313.6**

(22) Date de dépôt : **22.06.84**

(54) **Perfectionnement aux charrues réversibles multisocs portées.**

(30) Priorité : **24.06.83 FR 8310517**

(43) Date de publication de la demande :
**02.01.85 Bulletin 85/01**

(45) Mention de la délivrance du brevet :
**02.03.88 Bulletin 88/09**

(84) Etats contractants désignés :
**AT BE CH DE GB IT LI LU NL SE**

(56) Documents cités :
**EP-A- 0 019 275**
**FR-A- 1 100 499**
**FR-A- 2 061 183**
**FR-A- 2 216 892**
**US-A- 2 938 587**

(73) Titulaire : **S.A.R.L. Ets. GREGOIRE-BESSON et Cie**
**F-49230 Montigne sur Moine (FR)**

(72) Inventeur : **Besson, Alphonse**
**7 rue de la Vendée**
**F-49230 Montigne Sur Moine (FR)**

(74) Mandataire : **Lemonnier, André**
**Cabinet LEMONNIER 4, Boulevard Saint-Denis**
**F-75010 Paris (FR)**

EP 0 130 127 B1

## Description

La présente invention concerne les charrues réversibles multisocs portées. Les charrues portées comportent essentiellement une pièce d'attelage fixée sur l'attelage trois points du tracteur par une fixation comportant une articulation le long de la ligne d'axe inférieure et une articulation correspondant au troisième point d'attelage dans le plan axial vertical. La charrue qui comporte une poutre sur laquelle sont fixés les corps, est solidarisée avec la pièce d'attelage pour être relevée par rotation de cette dernière autour de la ligne d'axe inférieure sous l'action du dispositif de relevage trois points du tracteur.

Dans le cas des charrues portées réversibles qui comportent des corps opposés mis en œuvre alternativement par rotation de 180° autour d'un axe longitudinal, la solidarisation entre la pièce d'attelage et la poutre portant les paires de socs doit se faire par l'intermédiaire d'un arbre appelé ci-après arbre de renversement dont l'axe coïncide avec l'axe de rotation de la charrue. Dans les charrues réversibles actuellement connues cet arbre de renversement doit supporter à la flexion la totalité du poids de la charrue. Le couple de flexion auquel est soumis cet arbre est sensiblement égal au poids de la charrue multiplié par la moitié de la longueur de celle-ci. Avec une distance entre socs de 0,90 mètre et un poids moyen par paire de socs de 350 à 400 kg, le couple atteint déjà, pour une quadrisoc d'environ 4 mètres de long, 2 400 kg/m valeur qui passe à près de 3 600 kg/m pour une pentasoc et à 6 500 kg/m pour une six socs. En outre la longueur de la poutre s'accroît avec le nombre de socs et on constate déjà, avec une charrue réversible à cinq socs, outre des ruptures de l'arbre, des flexions du bâti arrière. Le renforcement de la poutre et de l'arbre aboutit à une augmentation du poids laquelle accroît les contraintes mécaniques et entraîne un prix de revient plus élevé. Il paraissait donc mécaniquement très difficile et économiquement très onéreux de satisfaire à la demande en charrues réversibles portées à cinq socs et même à six socs que permet d'envisager la puissance accrue des tracteurs.

Le problème du renforcement mécanique des charrues réversibles portées se complique du fait qu'outre la rotation autour de l'arbre de renversement, il faut prévoir un réglage du devers de pointe, c'est-à-dire une rotation de la poutre autour d'un axe vertical, et un réglage du déport latéral qui s'obtient par un déplacement latéral de l'extrémité avant de la poutre. Dans les charrues simples qui comportent également le réglage du devers de pointe et le réglage du déport latéral, mais non la rotation autour de l'axe longitudinal, on a déjà prévu, pour améliorer la résistance mécanique de la charrue, une jambe de force entre le sommet de la pièce d'attelage et un point situé sur la face supérieure de la poutre. Pour permettre les réglages, la jambe de force est articulée à ses deux extrémités mais il ne paraissait pas possible d'incorporer mécaniquement une telle jambe de force dans une charrue réversible.

Une jambe de force de longueur fixe est utilisée dans la charrue de FR-A-1 100 499 mais il s'agit d'une charrue dans laquelle les deux paires de socs sont situées de part et d'autre de la poutre, l'axe longitudinal de la poutre étant confondu avec l'axe de l'arbre de rotation, une telle charrue ne permettait pas le réglage du devers de pointe et du déport latéral. Dans FR-A-2 061 183 est proposée une jambe de force qui peut être de longueur fixe mais qui n'est utilisée que pendant le transport et qui est déconnectée pendant le travail c'est-à-dire lors des retournements de la charrue réversible. Enfin dans EP-A-0 019 275 la jambe de force est de longueur variable pour résoudre les problèmes ci-dessus exposés.

La présente invention a pour but de permettre d'appliquer aux charrues réversibles portées du type comportant un réglage du devers de pointe et du déport latéral le système de renforcement par une jambe de force de longueur fixe articulée, à une extrémité au sommet de la pièce d'attelage et, à son autre extrémité, en un point de la longueur de la poutre porte-socs qui n'était appliquée dans FR-A-1 100 499 qu'à des charrues ne comportant pas un tel réglage indispensable sur les charrues réversibles comportant plus de deux paires de socs.

Conformément à l'invention, dans une charrue réversible multisocs portée du type comportant une pièce d'attelage sur l'attelage trois points du tracteur et une poutre portant les paires de socs symétriques alignées dans un plan latéral parallèle à l'axe longitudinal de ladite poutre laquelle est solidarisée avec un arbre de renversement porté par la pièce d'attelage par des éléments de liaison susceptibles de faire varier l'obliquité de l'axe longitudinal de ladite poutre par rapport à l'axe de l'arbre de renversement de manière à régler le déport latéral et le dévers de pointe de la charrue, ladite charrue comportant de plus des moyens pour faire tourner ladite poutre autour dudit arbre de renversement d'un angle d'environ 180°, et une jambe de force articulée entre la pièce d'attelage et la poutre, la jambe de force, qui est en place en permanence et qui est de longueur fixe, est articulée sur la poutre par une articulation présentant au moins un degré de rotation autour d'un axe parallèle à l'axe longitudinal de la poutre et situé, à la fois, dans le plan de symétrie des socs et sur l'axe longitudinal de la poutre ou au-delà dudit axe par rapport aux socs.

Pour réaliser un degré de rotation autour d'un axe confondu avec l'axe de la poutre, il est possible d'incorporer dans la poutre un élément de révolution, tel qu'un bout d'arbre ou une rotule, sur lequel est montée à rotation une bielle sur laquelle est articulée, en un point excentré par rapport à l'axe de la poutre, l'extrémité correspondante de la jambe de force.

Pour réaliser le degré de rotation autour d'un axe non confondu avec l'axe longitudinal de la poutre, cet axe est déporté en réalisant un des éléments de l'articulation par une pièce solidaire d'une saillie latérale de la poutre, cet élément de l'articulation qui peut être un élément, mâle ou femelle, d'arbre ou de rotule, étant de révolution autour d'un axe parallèle à l'axe de la poutre et situé dans le plan de symétrie des socs.

Dans les charrues réversibles et du fait des réglages, la trajectoire, au cours du renversement, d'un point donné solidaire de la poutre correspond à un cercle dont le centre se trouve sur l'axe de l'arbre de renversement de la charrue sur la pièce d'attelage mais dont le rayon et la distance à un point de cet axe varie, le rayon n'étant nul et le point n'étant fixe que s'il se trouve sur ledit axe de l'arbre de renversement. Le point d'articulation de la jambe de force sur la pièce d'attelage étant excentré par rapport à l'axe de l'arbre de renversement, le point d'articulation de la jambe de force sur la poutre ne peut suivre la trajectoire définie ci-dessus, sauf si cette trajectoire est réduite à un point. Pour y remédier et selon une autre caractéristique de l'invention, l'arbre de renversement est monté à rotation, indépendamment du point d'articulation de la jambe de force sur la pièce d'attelage, autour d'un axe parallèle à l'axe d'articulation de la ligne d'axe inférieure de la pièce d'attelage. Avec ce mode de réalisation le couple de soulèvement et le couple de terrage de la charrue sont absorbés par la jambe de force sous forme d'un effort de traction ou de compression, l'arbre de renversement constituant seulement un point fixe mais absorbant le couple de déport latéral. Selon un mode de réalisation pratique le bras vertical de la pièce d'attelage en T est articulé autour d'un axe transversal sur la pièce transversale portant l'arbre de renversement et les tourillons de la ligne d'axe inférieure.

La présente invention sera décrite plus en détail ci-après sous forme de divers exemples de réalisation purement illustratifs avec référence aux dessins ci-annexés dans lesquels :

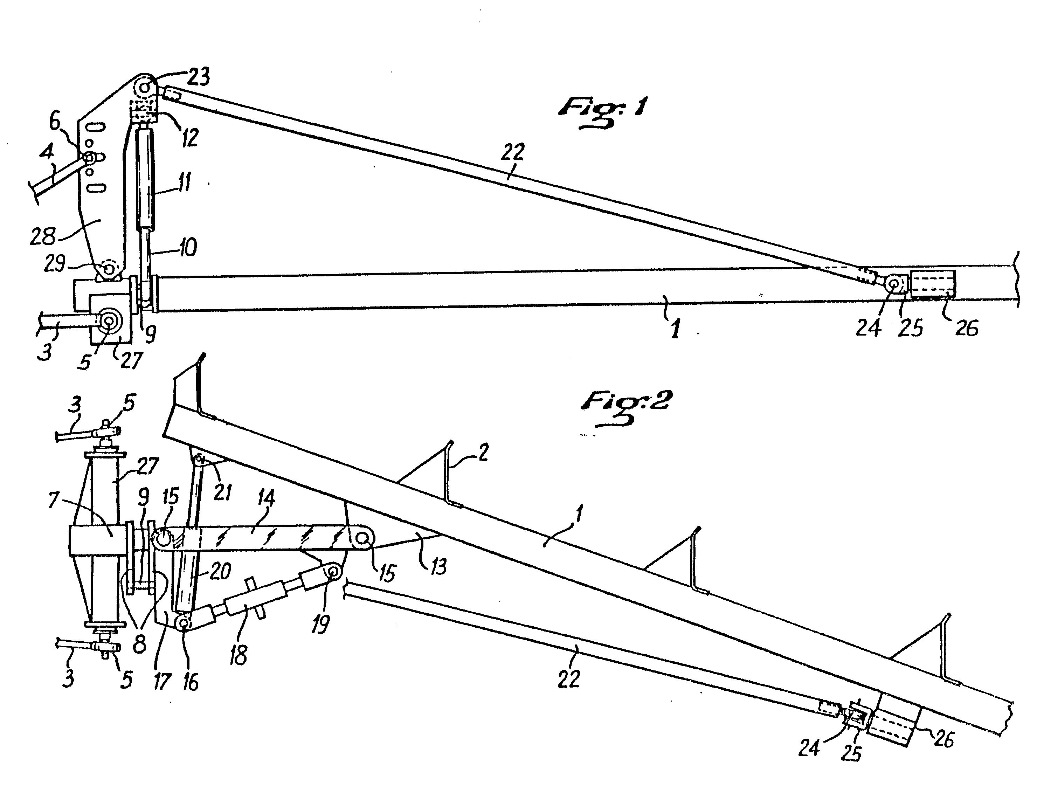

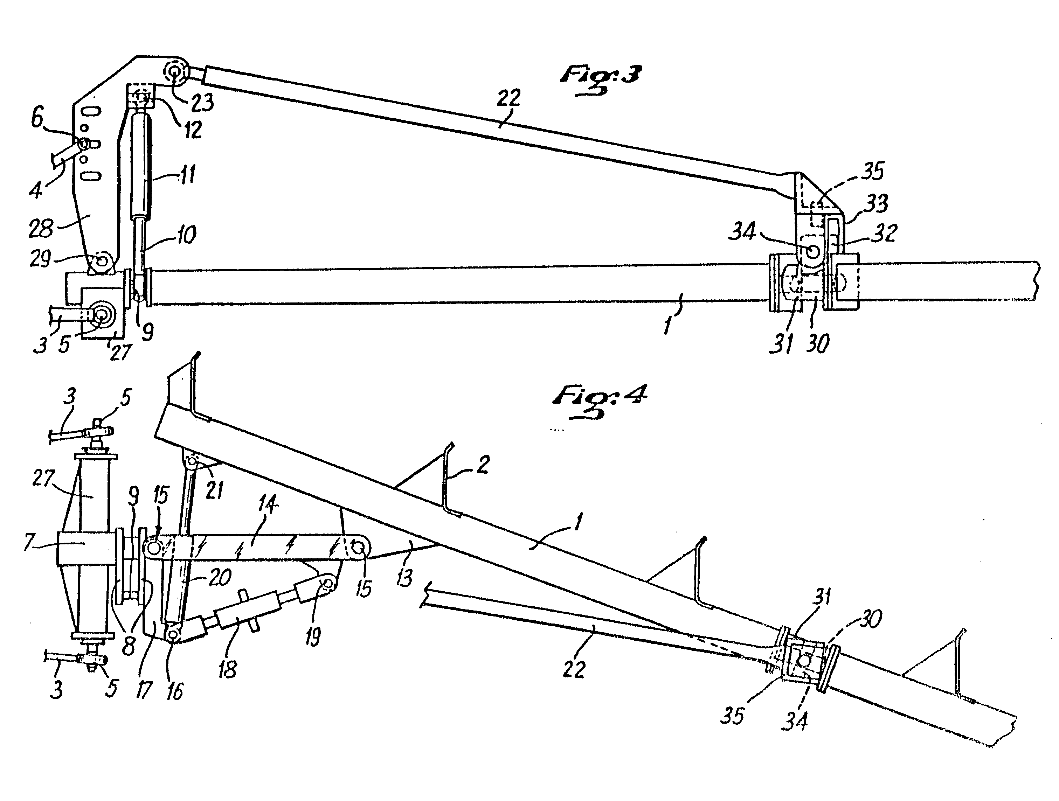

La figure 1 est une vue en élévation latérale partielle du bâti d'une charrue réversible portée conforme à l'invention ; la figure 2 en est une vue en plan partielle ; la figure 3 est une vue en élévation latérale correspondant à figure 1 pour une variante de réalisation et la figure 4 est une vue en plan correspondant au mode de réalisation de la figure 3.

Dans les dessins les socs de la charrue n'ont pas été représentés mais seulement la poutre 1 et les embases 2 des porte-socs, seuls les quatre porte-socs avant ayant été représentés. On a désigné par la référence 3 les deux bielles inférieures de l'attelage trois points du tracteur et par 4 la bielle supérieure, les deux bielles inférieures étant articulées en 5 sur la pièce d'attelage qui sera décrite plus en détail ci-après et la bielle supérieure en 6.

De la manière usuelle dans les charrues portées réversibles la fixation de la poutre 1 de la charrue sur la pièce d'attelage comporte un arbre de rotation de renversement 7 qui porte, par deux flasques 8, un bout d'axe excentré 9 sur lequel est articulée la tige 10 du vérin de renversement 11 articulé lui-même en 12 en un point haut axial de la pièce d'attelage. Ce vérin permet de manière connue de renverser la charrue entre la position représentée à la figure 2 et la position symétrique par rapport à l'arbre 7 pour mettre alternativement en œuvre les deux socs de chaque paire. De façon également connue, l'arbre de renversement 7 est relié à un flasque latéral 13 de la poutre 1 fixé sur celle-ci à l'opposé des porte-socs 2, par une bielle 14 articulée autour de deux axes parallèles 15. A l'extrémité 16 d'un bras latéral 17 sont articulés le vérin 18 de réglage du devers de pointe qui est articulé à son autre extrémité en 19 sur la bielle 14 et le vérin 20 de réglage du déport latéral articulé à son autre extrémité en 21 à l'extrémité avant de la poutre 1. Tous les éléments ci-dessus décrits sont connus ainsi que leur fonctionnement et ils peuvent être réalisés sous diverses autres formes également connues.

Pour le renversement, c'est-à-dire la rotation de 180° autour de l'arbre 7, on raccourcit en général le vérin 20 pour réduire l'encombrement, on relève la charrue à l'aide du relevage trois points du tracteur et on procède au renversement à l'aide du vérin 11. On conçoit qu'au cours de cette opération le couple exercé par le poids de la charrue est absorbé par la bielle 14 et ses axes 15 et surtout par l'arbre 7. Les contraintes étant très élevées, surtout avec les charrues à cinq ou six socs, on constate une usure rapide de l'arbre, des ruptures fréquentes et des déformations.

Pour y remédier, conformément à l'invention et comme illustré dans les figures 1 et 2, on prévoit une jambe de force 22 qui est articulée par une rotule en 23 en un point haut de la pièce d'attelage. A son autre extrémité la jambe de force 22 est articulée par une rotule en 24 sur une fourchette 25 dont l'axe est tourillonné dans une portée 26 solidaire de la poutre 1, d'axe parallèle à l'axe longitudinal de la poutre 1 et situé dans le plan de symétrie des socs. Il est évident que les rotules 23-24 pourraient être remplacées par des joints universels ou cardans.

Lors du renversement et si l'on considère la rotule 23 comme un point fixe, la rotule 24 va décrire le cercle de base d'un cône ayant la rotule 23 comme sommet mais la rotule 24 va également décrire un cône d'angle au sommet variable selon le réglage des vérins 18 et 20 qui va avoir pour axe l'arbre 7. Cette double définition de la trajectoire ne peut être satisfaite avec la rotule 23 située dans le plan vertical contenant l'arbre 7 qu'en modifiant l'inclinaison de l'arbre 7 et la position de la rotule 23 dans ce plan.

Ce résultat est obtenu conformément à une seconde caractéristique de l'invention par le fait que la pièce d'attelage est réalisée par une traverse inférieure 27 s'étendant entre les deux tourillons 5 et portant le palier de l'arbre 7 et par un montant vertical 28 articulé en 29 autour d'un axe horizontal, sur la traverse 27. Sur le montant vertical 28 est attelée en 6 la bielle supérieure 4 du relevage trois points du tracteur, le montant portant également la rotule 12 d'articulation du vérin 11 et la rotule 23 d'articulation de la jambe de force 22.

Il est à remarquer qu'il est théoriquement possible d'utiliser une pièce d'attelage rigide ne comportant pas la deuxième caractéristique de l'invention si l'axe de la portée 26 est confondu avec l'axe de l'arbre du pivot de renversement 7, car dans ce cas l'axe de l'arbre de pivotement, le centre de la rotule 24 et sa distance au point d'articulation 23 deviennent fixes. Il faut toutefois, avant chaque renversement, ramener les vérins 18 et 20 dans leurs positions rétablissant cette coaxialité et toute inexactitude de positionnement, tout jeu ou toute déformation entraîne l'apparition de contraintes extrêmement élevées qui sont évitées de façon sûre avec cette caractéristique.

Dans la variante de réalisation représentée aux figures 3 et 4 l'articulation de la jambe de force sur la poutre est réalisée en interposant dans la poutre un bout d'arbre 30 sur lequel est monté à rotation un manchon 31 portant un flasque 32 sur lequel est réalisée, par un étrier en U 33 articulé autour d'un axe transversal 34 sur le flasque 32 et par un axe vertical 35, l'articulation de la jambe de force 22 qui est articulée en 23 par une rotule au sommet de la pièce d'attelage. Il est à remarquer qu'en remplaçant dans cette variante de réalisation la rotule 23 par un axe vertical il serait possible de régler le devers de pointe en faisant agir le vérin 18 entre la pièce d'attelage et la jambe de force 22 qui peut être renforcée pour absorber les efforts de traction. De ce fait la bielle de traction 14 peut également être supprimée, l'arbre 7 ne servant plus que d'axe de renversement et il est possible de munir la partie avant et la partie arrière de la charrue de roues de jauge pour qu'en utilisation la charrue réversible devienne purement tractée, l'arbre de renversement qui supporte les efforts principaux étant reporté en bout de la jambe de force avec équilibrage partiel des efforts des socs avant poussés et des socs arrière tirés.

Avec les caractéristiques de l'invention et dans les divers modes de réalisation les forces verticales de relèvement et de terrage de la charrue sont absorbées par la jambe de force 22, l'arbre de renversement 7 absorbant essentiellement les couples dans le plan horizontal qu'il transmet aux paliers 5. De ce fait le dimensionnement de l'arbre 7 peut être réduit ou tout au moins ne nécessite pas le surdimensionnement important qui serait nécessaire avec des charrues portées réversibles à cinq ou six socs.

**Revendications**

1. Une charrue réversible multisocs portée du type comportant une pièce d'attelage sur l'attelage trois points du tracteur et une poutre portant les paires de socs symétriques alignés dans un plan latéral parallèle à l'axe longitudinal de ladite poutre laquelle est solidarisée avec un arbre de renversement (7) porté par la pièce d'attelage par des éléments de liaison (14, 18, 20) susceptibles de faire varier l'obliquité de l'axe longitudinal de ladite poutre par rapport à l'axe de l'arbre de renversement de manière à régler le déport latéral et le dévers de pointe de la charrue, ladite charrue comportant de plus des moyens pour faire tourner ladite poutre autour dudit arbre de renversement d'un angle d'environ 180°, et une jambe de force (22) articulée entre la pièce d'attelage (en 23) et la poutre (en 24), caractérisée en ce que la jambe de force (22), qui est en place en permanence et qui est de longueur fixe, est articulée sur la poutre par une articulation (26) présentant au moins un degré de rotation autour d'un axe parallèle à l'axe longitudinal de la poutre et situé, à la fois dans le plan de symétrie des socs et sur l'axe longitudinal de la poutre ou au-delà dudit axe par rapport aux socs.

2. Une charrue réversible multisocs portée selon la revendication 1, caractérisée en ce qu'elle comporte, incorporé dans la poutre, un élément de révolution, tel qu'un bout d'arbre ou une rotule, sur lequel est montée à rotation une bielle sur laquelle est articulée, en un point excentré par rapport à l'axe de la poutre, l'extrémité correspondante de la jambe de force (22).

3. Une charrue réversible multisocs portée selon la revendication 1, caractérisée en ce qu'elle comporte une articulation de la jambe de force (22) sur la poutre (1) réalisée par un élément d'articulation constitué par une pièce (26) solidaire d'une saillie latérale de la poutre, cet élément de l'articulation qui peut être un élément mâle, ou femelle, d'arbre ou de rotule étant de révolution autour d'un axe parallèle à l'axe de la poutre et situé dans le plan de symétrie des socs.

4. Une charrue réversible multisocs portée selon l'une quelconque des revendications 1 à 3, caractérisée en ce que l'arbre de renversement (7) est monté à rotation, indépendamment du point d'articulation (23) de la jambe de force (22) sur la pièce d'attelage, autour d'un axe parallèle à l'axe d'articulation de la ligne d'axe inférieure (5) de la pièce d'attelage.

5. Une charrue réversible multisocs portée selon la revendication 4, caractérisée en ce que le bras vertical (28) de la pièce d'attelage en T est articulé autour d'un axe transversal (29) sur la pièce transversale (27) portant l'axe de renversement (7) et les tourillons (5) de la ligne d'axe inférieure.

**Claims**

1. A multifurrow reversibly mounted plough of the type comprising a coupling member on the three-point hitch of the tractor and a beam carrying the pairs of symmetrical shares in alignment in a side plane parallel to the longitudinal axis of said beam, said beam being made rigid with a reversing shaft (7) carried by the coupling member via connecting elements (14, 18, 20) adapted for varying the obliquity of the longitudinal axis of said beam with respect to the axis of the reversing shaft so as to adjust the side offset of the beam front end and its angle of rotation about a vertical axis, said plough including moreover means for rotating said beam about said reversing shaft over an angle of about 180° and a strut (22) articulated between the coupling member (at 23) and the beam (at 24), characterized in that said strut (22), which is permanently in position and of fixed length, is articulated to the beam via a link (26) having at least one degree of rotation about an axis parallel to the longitudinal axis of the beam and lying both in the plane of symmetry of the shares and on the longitudinal axis of the beam, or beyond said axis with respect to the shares.

2. A multi-furrow reversible plough according to claim 1, characterized in that it includes, incorporated to the beam, an element of revolution such as a tail shaft or a swivel joint on which is rotatably mounted a connecting rod on which is articulated, at a point excentered with respect to the axis of the beam, the corresponding end of the strut (22).

3. A multi-furrow reversible plough according to claim 1, characterized in that it includes an articulation of the strut (22) on the beam (1) formed of an articulation element made of a part (26) rigid with a side protrusion of the beam, whereby said element of the articulation, which can be a male or female element of a shaft or of a swivel joint, is of revolution about an axis parallel to the beam axis and lies in the plane of symmetry of the shares.

4. A multi-furrow reversible plough according to any one of claims 1 to 3, characterized in that the reversing shaft (7) is rotatably mounted, independently with respect to the articulation point (23) of the strut (22) on the coupling member, about an axis parallel to the articulation axis of the lower axis line (5) of said coupling member.

5. A multi-furrow reversible plough according to claim 4, characterized in that the vertical arm (28) of the T-shaped coupling member is articulated about a transverse axis (29) on the transverse part (27) carrying the reversing shaft (7) and the journals (5) of the lower axis line.

**Patentansprüche**

1. Mehrfurchiger Anbaudrehpflug, der eine Vorrichtung zum Ankuppeln an eine Dreipunktkupplung eines Traktors und einen Träger aufweist, der die symmetrisch in einer zur Längsachse des Trägers parallelen seitlichen Ebene ausgerichteten Pflugscharpaare trägt, wobei der Träger an einer Umkehrwelle (7) befestigt ist, die von der Kuppelvorrichtung über Verbindungselemente (14, 18, 20) getragen wird, mit denen die Neigung der Längsachse des Trägers bezüglich der Achse der Umkehrwelle so variiert werden kann, daß der seitliche Versatz und die Schräglage der Spitze des Pfluges eingestellt werden können, wobei der Pflug außerdem Organe zum Drehen des Trägers um die Umkehrwelle herum um einen Winkel von ungefähr 180° und eine Strebe (22) aufweist, die zwischen der Kuppelvorrichtung (bei 23) und dem Träger (bei 24) angelenkt ist, dadurch gekennzeichnet, daß die Strebe (22), die dort permanent plaziert ist und eine konstante Länge hat mit einem Gelenk (26) an dem Träger angelenkt ist, das mindestens einen Drehfreiheitsgrad um eine Achse aufweist, die parallel zur Längsachse des Trägers ist und die gleichzeitig in der Symmetrieebene der Pflugscharen und auf der Längsachse des Trägers oder bezüglich der Pflugscharen über den Träger hinaus angeordnet ist.

2. Mehrfurchiger Anbaudrehpflug nach Anspruch 1, dadurch gekennzeichnet, daß der in dem Träger integriert ein symmetrisches Element aufweist, wie z. B. ein Ende einer Welle oder einen Kupplungskopf, auf dem drehbar eine Kuppelstange angeordnet ist, an der in einem bezüglich der Achse des Trägers exzentrischen Punkt das entsprechende Ende der Strebe (22) angelenkt ist.

3. Mehrfurchiger Anbaudrehpflug nach Anspruch 1, dadurch gekennzeichnet, daß er ein Gelenk der Strebe (22) auf dem Träger (1) aufweist, das mittels eines Gelenkelements realisiert ist, daß aus einem Teil (26) gebildet ist, das an einen seitlichen Vorsprung des Trägers befestigt ist, wobei dieses Gelenkelement, daß ein Buchsen- oder Steckerelement der Welle oder des Kupplungskopfes sein kann drehsymmetrisch um eine Achse ist, die parallel zur Trägerachse verläuft und in der Symmetrieebene der Pflugscharen liegt.

4. Mehrfurchiger Anbaudrehpflug nach einem der Ansprüche 1 bis 3, dadurch gekennzeichnet, daß die Umkehrwelle (7) unabhängig vom Anlenkpunkt (23) der Strebe (22) auf der Kupplungsvorrichtung um eine Achse drehbar ist, die parallel zur Drehachse der Linie der unteren Achse (5) der Kupplungsvorrichtung liegt.

5. Mehrfurchiger Anbaudrehpflug nach Anspruch 4, dadurch gekennzeichnet, daß der vertikale Schenkel (28) des T-förmigen Kupplungsstücks um eine transversale Achse (29) drehbar auf dem transversalen Stück (27) angelenkt ist, das die Umkehrwelle (7) und die Lagerzapfen (5) der unteren Achslinie trägt.

*Fig.1*

*Fig.2*

0 130 127

*Fig:3*

*Fig:4*

0 130 127